# EUROPÄISCHE PATENTSCHRIFT

(11) **EP 3 160 620 B1**
(45) Veröffentlichungstag und Bekanntmachung des Hinweises auf die Patenterteilung: **26.05.2021**
(21) Anmeldenummer: 15737976.9
(22) Anmeldetag: 24.06.2015
(51) Int. Cl.: B01D 53/04, B01D 53/26, B60T 17/00

(54) **VORRICHTUNG ZUM ANORDNEN IN EINEM BEHÄLTER EINES SORPTIONSTROCKNERS FÜR EIN FLUID, BEHÄLTER EINES SORPTIONSTROCKNERS UND SYSTEM**
DEVICE FOR ARRANGING IN A CONTAINER OF A SORPTION DEHYDRATOR FOR A FLUID, CONTAINER OF A SORPTION DEHYDRATOR AND SYSTEM
DISPOSITIF À METTRE EN PLACE DANS UN RÉSERVOIR D'UN SÉCHOIR À SORPTION DESTINÉ À UN FLUIDE, RÉSERVOIR DE SÉCHOIR À SORPTION ET SYSTÈME

(30) Priorität: 26.06.2014 DE 102014009292; 23.09.2014 DE 102014013806
(43) Veröffentlichungstag der Anmeldung: 03.05.2017
(73) Patentinhaber: Donaldson Filtration Deutschland GmbH, 42781 Haan (DE)
(72) Erfinder: RBAYTI, Abdelkhalic, 40477 Düsseldorf (DE); SCHAEFER, Jens, 41352 Korschenbroich (DE); BONGARTZ, Wolfgang, 41472 Neuss (DE); FULKO, Susanne, 51688 Wipperfürth (DE); SCHAAF, Peter, 40764 Langenfeld (DE); LETTAU, Andreas, 55270 Engelstadt (DE); SCHWARZ, Peter, 40217 Düssledorf (DE); WESTPHAL, Roland, 16761 Hennigsdorf (DE)
(74) Vertreter: König Szynka Tilmann von Renesse Patentanwälte Partnerschaft mbB
(86) Internationale Anmeldenummer: PCT/EP2015/001269
(87) Internationale Veröffentlichungsnummer: WO 2015/197189

(56) Entgegenhaltungen:
- WO-A1-2007/090250
- WO-A2-2011/044091
- DE-A1- 2 646 259
- DE-A1- 19 645 009
- DE-B3-102010 036 382
- US-A1- 2012 090 470

## Beschreibung

Die Erfindung betrifft eine Vorrichtung zum Anordnen in einem Behälter eines Sorptionstrockners für ein Fluid, wobei in den Behälter eine Kartusche zur Aufnahme eines Trockenmittels einsetzbar ist, einen Behälter eines Sorptionstrockners und ein System beinhaltend eine Vorrichtung und einen Sorptionstrockner.

Druckbeaufschlagte Fluide, insbesondere Gase, ganz bevorzugt Druckluft, werden beispielsweise als Antriebs- und Prozessenergie in allen Bereichen der industriellen und handwerklichen Fertigung benötigt. Insbesondere Druckluft muss trocken, ölfrei und sauber sein, um kostspielige Produktionsausfälle zu vermeiden. In der Regel wird Druckluft durch das Verdichten von Luft erzeugt, d.h. ein Kompressor saugt Umgebungsluft an. Die Umgebungsluft kann Schadstoffe, Schmutzpartikel und auch Feuchtigkeit in Form von Wasserdampf enthalten. Der Wasserdampf kann in der Druckluft unkontrolliert kondensieren und zu betrieblichen Störungen und somit zu erheblichen Kosten führen. Um die betrieblichen Störungen zu vermeiden, wird meist ein mit Druck beaufschlagtes Fluid einer Vorrichtung zur Aufbereitung zugeführt, um auch den Anforderungen der unterschiedlichen Bereiche der Anwendung, beispielsweise Reinraumerfordernisse der Lebensmittel- oder Halbleiterindustrie, zu genügen.

Vorrichtungen zur Trocknung und Filterung eines Gases sind in verschiedenen Bauformen bekannt. In einer bevorzugten Ausführungsform sind derartige Vorrichtungen als Sorptionstrockner ausgebildet.

Sorptionstrockner dienen im Allgemeinen dazu, Feuchtigkeit aus einem Gas und insbesondere einem komprimierten Gas, wie z.B. Druckluft, zu entfernen. Bei der Erzeugung von Druckluft saugt ein Kompressor Umgebungsluft an und verdichtet diese. Während des Verdichtungsprozesses werden alle Bestandteile der angesaugten Luft entsprechend dem Betriebsüberdruck konzentriert bei gleichzeitiger Temperaturerhöhung. Die Aufnahmekapazität der Druckluft für Feuchtigkeit bleibt jedoch annähernd konstant. Die nachfolgende Abkühlung führt daher zur Sättigung der Druckluft mit Feuchte, jede weitere Abkühlung zur Kondensation der überschüssigen Feuchte. Es entsteht Wasser, welches in der Druckluft im gesamten nachfolgenden Druckluftsystem Rost und Korrosion verursachen kann. Es kann auch zu Vereisungen führen. Rost, Korrosion und Vereisungen führen zu hohen Folgekosten bei der Wartung, zu Qualitätseinbußen, insbesondere bei Anwendungen, die hohe Anforderung an die Reinheit der Druckluft stellen, wie beispielsweise Anwendungen in der Lebensmittelindustrie, der Pharmaindustrie oder in der Halbleitertechnik, und zum frühzeitigen Ausfall von einzelnen Komponenten bis hin zum kompletten Produktionsausfall. Wasser und Feuchtigkeit müssen daher aus dem Druckluftsystem entfernt werden.

Bekannte Sorptionstrockner weisen in der Regel mindestens zwei Behälter als Teilabschnitte einer Rohrleitung des Sorptionstrockners auf, in denen mindestens eine Kartusche mit einem Trockenmittel (Sorbens) - häufig in Form einer Schüttung des granulatförmigen Trockenmittels - angeordnet ist. Häufig kommen adsorptive Trockenmittel zum Einsatz, wobei auch absorptive Trockenmittel verwendet werden können. Die beiden Behälter als Teilabschnitte der Rohrleitung sind durch Leitungen parallel miteinander und jeweils mit dem Einlass des zu trocknenden Gases und dem Auslass des getrockneten Gases verbunden. Der Strömungsweg des Gases wird über Ventile gesteuert. Die Steuerung der Ventile übernimmt eine Steuereinheit. Die Steuerung der Ventile ist dabei so ausgelegt, dass stets ein Behälter von dem zu trocknenden Gas durchströmt wird. In diesem wird das Gas getrocknet, indem die darin enthaltene Feuchtigkeit von dem in dem Behälter enthaltenen Trockenmittel gebunden wird. In dieser Phase befindet sich dieser Behälter somit in einer Sorptions- oder Trockenphase. Während der Sorptionsphase des einen Behälters wird der andere Behälter (in der Regel) in entgegengesetzter Richtung von einem Teil des getrockneten Gases durchströmt, um das während einer vorherigen Sorptionsphase gesättigte Sorbens zu trocknen, d.h. zu regenerieren. Dieser Behälter befindet sich dabei folglich in der Regenerationsphase. Wenn das Sorbens ohne externe Zufuhr von Wärmeenergie, d.h. lediglich durch einen Teilstrom des vorab getrockneten Gases getrocknet wird, handelt es sich um eine so genannte kalte Regeneration. Nach einer vorgegebenen, von der Belastung des Sorptionstrockners abhängigen Zeitspanne, ist es erforderlich, die Ventile in den Zu- und Ableitungen so umzusteuern, dass derjenige Behälter, der sich bislang in der Sorptionsphase befand, regeneriert wird und der Behälter, der vorher regeneriert wurde, nunmehr zur Trocknung des Gases verwendet wird.

Aus dem Stand der Technik ist zudem die warme Regeneration eines Sorptionstrockners bekannt. Hierbei wird der sich in der Regenerationsphase befindliche Sorptionsbehälter durch Luft regeneriert, die durch Zufuhr externer Energie aufgeheizt wurde. Bei der Luft kann es sich entweder um einen Teilstrom der getrockneten Druckluft handeln oder es kann z.B. auch Umgebungsluft verwendet werden. Zum Aufheizen der Regenerationsluft im Zusammenhang mit der warmen Regeneration werden regelmäßig elektrische Heizvorrichtungen eingesetzt.

Weiterhin ist es bekannt, derartigen Sorptionstrocknern oder anderen Trocknungsanlagen weitere mit verschiedenen Adsorptionsmitteln oder Katalysatoren wie z.B. Aktivkohle gefüllte Reinigerstufen nachzuschalten, die weitere unerwünschte Bestandteile des getrockneten Gases, wie beispielsweise Öldampf, herausfiltern. Dabei werden Adsorptionsmittel und Katalysatoren als Mittel zum Reinigen verwendet, weil sie weitere unerwünschte Bestandteile des getrockneten Gases, insbesondere flüssige, dampfartige oder gasartige Stoffe aus dem Gas entfernen können. Hiervon unterschieden werden die im Stand der Technik in derartigen Vorrichtungen auch verwendeten Mittel zum Filtern des Gases, deren Aufgabe es ist, Feststoffe, insbesondere Partikel aus dem Gas zu entfernen.

Verbrauchtes Trockenmittel eines Sorptionstrockners kann ersetzt werden. Dazu kann die Kartusche, in der das Trockenmittel aufgenommen bzw. enthalten ist, ausgewechselt werden.

Die DE 196 45 009 A1 offenbart in dem Ausführungsbeispiel ihrer Figur 8 einen seitlich an einer zylinderförmig ausgeführten Kartusche radial nach außen ragenden Stift sowie eine in der Wandung der benachbarten Kartusche seitlich ausgeführten Kulisse, die mit dem Stift der benachbarten Kartusche als Bajonettverschluss zusammenwirken kann.

Die US 2012/0090470 A1 beschreibt eine Endkappe 103 für eine Kartusche. Diese Endkappe besteht aus einem äußeren Ring 107. Von dem äußeren Ring ragen radial geführte Rippen 109 in das Zentrum 108 der Endkappe 103.

Aus der DE 10 2010 036 382 B3 ist es bekannt, eine Kartusche mit einem Deckel, einem Kartuschenmantel und einem Boden auszustatten. Dabei wird ein Zentralrohr innerhalb der Kartusche angeordnet, das sich durch den Deckel und je nach Ausführungsvariante auch durch den Boden hindurch erstreckt. Hierfür ist eine - wie sich aus der Figur 4 der DE 10 2010 036 382 B3 ergibt - konzentrische Deckelöffnung 42 vorgesehen, durch das das zentrisch angeordnete Zentralrohr 36 ragt.

Aus der WO 2011/044091 A2 ist es bekannt, eine Vorrichtung mit einer Mehrzahl von Kartuschen auszurüsten, die jeweils nur einen zentrischen, bzw. eine zentrische Vertiefung aufweisen.

In der DE 26 46 259 A1 wird beschrieben, an einem Deckel eines Behälters eine als Sackloch ausgeführte Öffnung, aus dem seitliche Schlitze in den Raum unter dem Deckel führen, vorzusehen.

Vor diesem Hintergrund lag der Erfindung die Aufgabe zugrunde, eine Vorrichtung zu schaffen, durch die der Sorptionstrockner verbessert effektiv arbeitet und/oder die eine verbesserte Handhabung bei der Montage und/oder Wartung beim Ersatz der Kartusche und/oder bei der Herstellung der Vorrichtung und/oder der Kartusche ermöglicht, wobei insbesondere die Abdichtung des Strömungspfades nicht beeinträchtigt ist und die Vorrichtung dennoch einfach aufgebaut sein kann.

Diese Aufgabe wird durch die Gegenstände der nebengeordneten Ansprüche gelöst.

Es wird eine Vorrichtung zum Anordnen in einem Behälter eines Sorptionstrockners für ein Fluid geschaffen, wobei in den Behälter eine Kartusche zur Aufnahme eines Trockenmittels einsetzbar ist.

Die Erfindung geht von dem Grundgedanken aus, dass an einer Stirnseite der Vorrichtung mindestens ein Vorsprung und/oder eine Vertiefung außermittig angeordnet ist, so dass die Vorrichtung in einer vorbestimmten Ausrichtung und/oder Orientierung in den Behälter einsetzbar ist, um eine Verbindung mit einer weiteren Vorrichtung oder einem am Sorptionstrockner vorgesehenen Anschlusselement zu ermöglichen. In diesem Zusammenhang umfasst der Begriff "außermittig" eine Anordnung des Vorsprungs und/oder der Vertiefung derart, dass der Mittelpunkt des Vorsprungs und/oder der Vertiefung nicht mit dem Mittelpunkt der Stirnseite zusammenfällt. Die zusätzliche Ausbildung eines mittigen Vorsprungs und/oder einer mittigen Vertiefung ist nicht ausgeschlossen. Insbesondere kann an dem mit der Vorrichtung zu verbindenden Element eine entsprechende korrespondierende Struktur an einer Fläche ausgebildet sein, mit der der mindestens eine Vorsprung und/oder die mindestens eine Vertiefung, die außermittig ausgebildet ist, in Eingriff gebracht werden kann. Mittels des mindestens einen Vorsprungs und/oder der mindestens einen Vertiefung kann die Lage der Vorrichtung zu den im Strömungspfad benachbarten Elementen hinsichtlich einer Rotation um die Normale der Stirnseite, an der der mindestens eine Vorsprung und/oder die mindestens eine Vertiefung ausgebildet ist, eindeutig festgelegt werden, wodurch auf den Verlauf und die Ausbildung des Strömungspfades Einfluss genommen werden kann. Beispielsweise kann ein Servicetechniker oder Nutzer, der eine Kartusche in den Behälter einsetzen muss, auf die Anordnung des mindestens einen Vorsprungs und/oder die Anordnung der mindestens einen Vertiefung zurückgreifen, um die korrekte Orientierung der Vorrichtung zu erreichen. Erfindungsgemäß wird über die Ausbildung eines Vorsprungs und/oder eine Vertiefung eine Steckverbindung erreicht die für einen Servicetechniker oder Nutzer einfach zu handhaben ist.

Eine Verschraubung zur Ausbildung der Verbindung kann entfallen. Der mindestens eine Vorsprung und/oder die mindestens eine Vertiefung muss lediglich in Eingriff mit einer korrespondierenden Struktur gebracht werden. So ist es beispielsweise möglich, dass ein Vorsprung bzw. eine Vertiefung mit einer korrespondierenden Vertiefung bzw. einem korrespondierenden Vorsprung in Eingriff gebracht werden kann. Es kann aber auch vorgesehen sein, dass ein Vorsprung in einen anderen Vorsprung an einer Verbindungstelle ragt. Es wird eine Steckverbindung mit Vorsprung und/oder Vertiefung ausgebildet bei der ein Vorsprung als Stecker und eine Vertiefung als Buchse verwendet wird, und Vertiefung und/oder Vorsprung Steckelemente sind. Es kann auch vorgesehen sein, dass Zwischenelemente verwendet werden, um beispielsweise eine Vertiefung mit einer Vertiefung an einer weiteren Vorrichtung und/oder an einem sorptionstrocknerseitigen Anschlusselement zu verbinden; ein derartiges Zwischenelement könnte ein rohrförmiger Zylinder sein, der endseitig jeweils in einer der Verbindungen eingesetzt werden kann. Vorzugsweise können an zwei gegenüberliegenden Flächen jeweils mindestens ein Vorsprung und/oder eine Vertiefung vorgesehen sein. Beispielsweise können mehrere Vorrichtungen gestapelt in den Behälter mittels einer Ausbildung einer Steckverbindung eingesetzt werden. Der mindestens eine Vorsprung und/oder die mindestens eine Vertiefung können auf beiden gegenüberliegenden Flächen geometrisch gleich oder verschieden ausgebildet sein. Die nachfolgenden Ausführungen hinsichtlich einer der Flächen gelten, soweit eine solche gegenüberliegende Fläche vorgesehen ist, für die gegenüberliegende Fläche entsprechend.

Die Vorrichtung weist demnach eine Stirnseite mit einem Vorsprung und/oder einer Vertiefung auf. Die Stirnseite weist eine nach außen gerichtete bzw. exponierte Fläche auf, die zumindest einen Abschnitt aufweist, der auf das kopfseitige oder bodenseitige Ende des Behälters oder einer benachbarten Vorrichtung hin ausgerichtet ist. Der zumindest eine Abschnitt der Fläche kann eine Flächennormale aufweisen, die die Querschnittsfläche des kopfseitigen oder bodenseitigen Endes des Behälters schneidet, vorzugsweise in einem Winkelbereich von 60° bis 120°, insbesondere bevorzugt nahe 90°. Die stirnseitige Fläche ist vorzugsweise an einem stirnseitig angeordneten Element der Vorrichtung bzw. einem Stirnelement gebildet. Die Vorrichtung kann das Stirnelement umfassen oder aus dem Stirnelement bestehen. Das Stirnelement weist vorzugsweise eine in Bezug auf Größe und Form an den Behälterquerschnitt angepassten Querschnitt auf.

Die Vorrichtung weist eine erste Stirnseite und eine zweite, der ersten Stirnseite gegenüberliegende und von der ersten Stirnseite fortweisende Stirnseite auf. An beiden Stirnseiten der Vorrichtung sind Durchgangsöffnungen ausgebildet. Es kann insbesondere vorgesehen sein, innerhalb der Vorrichtung keinen durch eine zusätzliche Wandung umschlossenen Kanal auszubilden. Das Innere der Vorrichtung kann frei durchströmbar sein. Frei durchströmbar schließt begrifflich mit ein, dass zwischen den Durchgangsöffnungen kein physisch vorhandener begrenzter Kanal gebildet ist, der die Durchgangsöffnungen jeweils endseitig begrenzt. Die innere Oberfläche einer Außenwandung der Vorrichtung kann in Strömungsverbindung mit einer an der Stirnseite ausgebildeten Durchgangsöffnung stehen. Die Vorrichtung kann im Innern frei von Zwischenwänden sein. Die Vorrichtung kann vorzugsweise mittig an einer Stirnseite oder an zwei Stirnseiten geschlossen ausgebildet sein. Die Vorrichtung kann im mittigen Bereich der Stirnseite eine glatte Stirnfläche ohne Vorsprung und/oder Vertiefung aufweisen. Die Stirnseite der Vorrichtung ist vorzugsweise gewindelos.

Im Sinne der Erfindung wird unter einem "Sorptionstrockner" eine Vorrichtung zur Trocknung eines Fluids verstanden, bei der zusätzlich eine Filterung des Fluids vorgesehen sein kann. Ein mit Druck beaufschlagtes Fluid kann demnach in vorbestimmter Qualität bzw. Ausmaß von Feuchtigkeit und gegebenenfalls von Partikeln befreit werden. Ein Sorptionstrockner im Sinne der Erfindung kann einen Einlass und einen Auslass für das Fluid aufweisen, wobei zwischen dem Einlass und dem Auslass ein oder mehrere vom Fluid durchströmbare Trockenmittel und/oder Filtermittel angeordnet sein können. In dem Sorptionstrockner kann nach dem Einlass in Strömungsrichtung des Fluids ein Vorfilter vorgesehen sein, in dem das Fluid von Partikeln und Kondensat befreit werden kann. Das anfallende Kondensat kann über einen Kondensatableiter aus dem Vorfilter abgeführt werden.

Dem Vorfilter nachfolgend kann das Fluid durch ein Trockenmittel geführt werden, das in einer oder mehreren Kartuschen als Granulat angeordnet ist, welches ein Molekularsieb sein kann. Die Kartuschen befinden sich in einem Behälter des Sorptionstrockners. Mindestens eine Kartusche kann in dem Behälter angeordnet werden. Es können auch mehrere direkt oder indirekt (mittels entsprechender Verbindungsstücke) miteinander verbundene Kartuschen in dem Behälter angeordnet werden. Der Behälter kann Teil der Rohrleitung des Sorptionstrockners sein. In einer bevorzugten Ausführungsform kann auf das Innere des Behälters mittels Öffnen eines stirnseitig angeordneten Deckels und/oder Bodens zugegriffen werden. Der Behälter kann geöffnet werden und die Kartuschen eingesetzt bzw. entnommen werden. In einer bevorzugten Ausführungsform ist die Innenwandung des Behälters im Querschnitt im Wesentlichen kreisförmig, zumindest abschnittsweise bogenförmig. Oberhalb und unterhalb des Behälters sind im Deckel und/oder Boden Anschlusselemente vorgesehen, die mit der Kartusche, in der das Trockenmittel aufgenommen ist, verbunden werden können. Es kann auch vorgesehen sein, dass Adapter und/oder Anschlussstücke zwischen die anlagenseitigen Anschlusselemente und die Kartusche zwischengeschaltet bzw. zwischenverbunden werden. Über die Verbindung eines der sorptionstrocknerseitigen Anschlusselemente und der Vorrichtung wird eine gasdichte Verbindung erreicht, die notwendig ist, um die gewünschte Entfeuchtung zu erzielen. Die gasdichte Verbindung muss auch mit jeder weiteren Vorrichtung, die möglicherweise in den Behälter eingesetzt wird, beispielweise im Falle gestapelter Kartuschen, ausgebildet werden.

In dem in der Kartusche aufgenommenen Trockenmittel kann das Fluid bis zu einem erforderlichen Trockenheitsgrad (Drucktaupunkt) getrocknet werden. Dem Trockenmittel in Strömungsrichtung nachfolgend kann ein Nachfilter vorgesehen sein, in welchem eventuell anfallende Partikel aus dem Trockenmittel zurückgehalten werden. Dem Nachfilter kann der Auslass der Vorrichtung folgen und das saubere und trockene Fluid kann in ein Fluidversorgungsnetz und zur Anwendung gelangen. Es ist möglich, dass Teilströme in der Vorrichtung gebildet werden. Es können zwei Strömungspfade vorhanden sein, wobei sich in einem Strömungspfad ein Trockenmittel in einem Trocknungstakt (Adsorptionsphase) befinden kann, und in einem anderen Strömungspfad ein Trockenmittel selbst getrocknet werden kann (Regenerationsphase). Es kann auch vorgesehen sein, dass ein Teilstrom bereits getrockneten Fluids über eine Blende auf atmosphärischen Druck entspannt wird, zur Regeneration über das Trockenmittel geführt und über ein insbesondere als Magnetventil ausgestaltetes Ventil und gegebenenfalls einen Schalldämpfer an die Umgebung abgeführt wird.

Der Begriff "Behälter" umfasst erfindungsgemäß einen Abschnitt einer Rohrleitung eines Sorptionstrockners, in den Trockenmittel zur Entfeuchtung des Fluids, beispielsweise in Form einer oder mehrerer hintereinander angeordneter Kartuschen, einsetzbar ist. In einer bevorzugten Ausführungsform weist der Behälter stirn- bzw. endseitig einen Einlass und einen Auslass auf, mittels derer das Fluid in den/aus dem Behälter geleitet wird. Einlass und/oder Auslass können mit einem Anschlusselement versehen sein, so dass stirnseitig (anders ausgedrückt am boden- und/oder kopfseitigen Ende) der Behälter ein Anschlusselement aufweisen kann. Das Anschlusselement kann anlagenseitig ausgebildet sein. Das Anschlusselement kann Teil eines Bodens oder Deckels des Behälters sein. Das Anschlusselement kann den Aufnahmeraum des Behälters nach oben bzw. unten begrenzen. Der Begriff "Anschlusselement" umfasst die Ausbildung bzw. das Vorsehen von mindestens einer, vorzugsweise als Steckelement, an einer Fläche, die in den Behälter gerichtet ist, ausgestalteten Vertiefung und/oder Vorsprung gegenüber der Fläche. Der mindestens eine Vorsprung und/oder die mindestens eine Vertiefung der Vorrichtung kann mit der Vertiefung und/oder dem Vorsprung am Anschlusselement des Behälters in gasdichten Eingriff gebracht werden.

Der Begriff "Fluid" umfasst erfindungsgemäß ein Gas, insbesondere Druckluft.

Der Begriff "Kartusche" umfasst eine geschlossene Einheit, in der das Trockenmittel aufgenommen ist. Vorzugsweise herrscht zwischen dem Trockenmittel und der Kartusche ein derartiger Druck, dass das Trockenmittel in der Kartusche unbeweglich ist. Dazu ist das Trockenmittel vorzugsweise so in die Kartusche eingefüllt und in dieser fixiert, dass es auch unter dem Einfluss höherer Gasgeschwindigkeiten unbeweglich ist. In einer bevorzugten Ausführungsform weist die Kartusche eine seitliche Außenwandung auf, die eine Seitenwand in Form einer Mantelfläche eines Zylinders bilden kann. Ein kopf- und bodenseitiger Abschluss kann an der Stirnseite mittels eines Stirnelements, das jeweils mindestens eine Öffnung zum Durchtritt für das Fluid - als Ein- bzw. Auslass in die Kartusche - aufweist, gebildet werden. Das Stirnelement kann einstückig mit dem mindestens einen Vorsprung, der mindestens einen Vertiefung und den die Öffnungen bildenden Umrandungsflächen ausgebildet sein. In einer bevorzugten Ausführungsform ist die erfindungsgemäße Vorrichtung als Kartusche mit Trockenmittel ausgebildet und weist zwei Stirnelemente und eine seitliche Außenwandung auf. Die Außenwandung kann mit den Stirnelementen mittels eines bekannten Verfahrens verbunden werden.

Mit der außermittigen Anordnung mindestens einer Vertiefung und/oder eines Vorsprungs sind verschiedene geometrische Ausbildungen an der Stirnseite möglich. Ein Vorsprung ist an der Stirnseite außermittig angeordnet wobei an der Stirnseite weitere Elemente - auch mittig - vorgesehen sein können. Beispielsweise kann auch eine Vertiefung an der Stirnseite außermittig angeordnet sein, wobei an der Stirnseite weitere Elemente - auch mittig - vorgesehen sein können. Eine beliebige Anzahl von außermittigen Vorsprüngen kann mit einer beliebigen Anzahl von Vertiefungen auf der Stirnseite kombiniert werden. Die Orientierung der Vorrichtung in dem Behälter bezüglich einer Rotation um die Längsachse der Vorrichtung kann näher festgelegt werden, wenn mehrere Vertiefungen und/oder mehrere Vorsprünge an der Stirnseite außermittig angeordnet sind, da sich unterschiedliche Geometrien ergeben können, die nur hinsichtlich einer vorbestimmten Orientierung die Ausbildung einer Steckverbindung zulässt. Es kann aber auch eine vereinfachte Geometrie gewählt werden, die beispielsweise hinsichtlich einer Rotation um einen Winkel, unter dem die Steckelemente voneinander beabstandet sind, invariant ist.

Der Begriff "Vorsprung" umfasst erfindungsgemäß eine makroskopische Erhebung auf einer Fläche. Die makroskopische Erhebung ist vorzugsweise lokal begrenzt. Die Erhebung steht gegenüber der Fläche vor. Die Erhebung weist mindestens einen Punkt auf, der außerhalb einer von der Fläche aufgespannten Ebene liegt. Der Punkt kann in einem Abstand zur Fläche von 5 mm bis 100 mm, bevorzugt in einem Abstand von 10 mm bis 50 mm, insbesondere bevorzugt in einem Abstand von 10 mm bis 30 mm liegen. Ein Vorsprung kann als strukturelles Element mit einer korrespondierend ausgebildeten Vertiefung mechanisch in Eingriff bringbar sein. Zwischen dem Vorsprung und einer korrespondierend ausgebildeten Vertiefung kann ein Formschluss ausbildbar sein. Ein Vorsprung kann auch mit einem Vorsprung in Formschluss bringbar sein. Bei einer Steckverbindung zwischen einem Vorsprung und einer Vertiefung kann der äußere Rand des Vorsprungs an den Rand der Vertiefung angepasst sein. Bei einer Steckverbindung zwischen zwei Vorsprüngen kann ein innerer Rand einer der beiden Vorsprünge an einen äußeren Rand des anderen der beiden Vorsprünge angepasst sein. Die äußere Form des Vorsprungs kann erfindungsgemäß die Form eines Prisma oder eines allgemeinen Zylinders aufweisen, wobei bevorzugt ein Vorsprung als Zylinder ausgebildet ist, der eine gegenüber der Fläche sich senkrecht erstreckende Zylinderfläche aufweist. Der Zylinder hat bevorzugt auf der der Fläche gegenüberliegenden Seite eine sich im Wesentlichen senkrecht oder geneigt zur Mantelfläche erstreckende Abschlussfläche. Der Querschnitt des Zylinders kann beliebig sein. Beispielsweise kann der Querschnitt des Zylinders rund sein oder Ecken aufweisen. In einer bevorzugten Ausführungsform ist der Querschnitt des Zylinders ellipsenförmig oder kreisförmig. Innerhalb des Vorsprungs kann eine Vertiefung ausgebildet sein, so dass der Vorsprung als randseitige Wandung oder Wulst einer Vertiefung ausgebildet sein kann. Insbesondere kann der Vorsprung im Wesentlichen zumindest abschnittsweise ringförmig bzw. hohlzylinderförmig ausgestaltet sein.

Der Begriff "Vertiefung" umfasst erfindungsgemäß eine makroskopische Aussparung in einer Fläche. Die makroskopische Aussparung ist lokal begrenzt. Die Vertiefung der Vorrichtung kann als strukturelles Element mit einem korrespondierend ausgebildeten Vorsprung mechanisch in Eingriff bringbar sein. Es kann ein Formschluss zwischen der Vertiefung und einem korrespondierend ausgebildeten Vorsprung erreichbar sein. Die Form der Vertiefung kann erfindungsgemäß die Form eines inversen allgemeinen Zylinders aufweisen, wobei die Vertiefung von einer seitlichen Wand umgeben ist. Bevorzugt kann eine Vertiefung als inverses Prisma oder als inverser Zylinder ausgebildet sein, der eine gegenüber der Fläche sich im Wesentlichen senkrecht erstreckende inverse Zylinderfläche (Randfläche) aufweist. Der Querschnitt der seitlichen Wand der Vertiefung kann beliebig sein und sich in der Tiefe verändern. Die seitliche Wand kann eine runde oder Ecken aufweisende Vertiefung umgeben. In einer bevorzugten Ausführungsform ist der Querschnitt der Vertiefung kreisförmig oder ellipsenförmig. Die Vertiefung kann einen Vertiefungsboden aufweisen. Die Vertiefung kann als Sackloch ausgestaltet sein. Der Vertiefungsboden kann einen Abstand von der Stirnfläche aufweisen, der im Bereich von 5 mm bis 100 mm, bevorzugt im Bereich von 10 mm bis 50 mm, insbesondere bevorzugt im Bereich von 10 mm bis 30 mm liegt. Der Vertiefungsboden kann Abschnitte aufweisen, die sich im Wesentlichen senkrecht oder geneigt zur Zylinderfläche der Vertiefung erstrecken. Die seitliche Wand der Vertiefung kann strukturiert oder profiliert sein. Innerhalb der Vertiefung kann ein Vorsprung ausgebildet sein, so dass die Vertiefung einen Vorsprung umgeben kann. Insbesondere kann der Vorsprung im Wesentlichen zumindest abschnittsweise ringförmig oder zylinderförmig ausgestaltet sein. Es kann auch vorgesehen sein, dass die Vertiefung als ein Durchgangsloch ausgestaltet ist.

Mindestens einem Vorsprung und/oder einer Vertiefung ist eine Öffnung zum Durchtritt des Fluids zugeordnet, so dass an der Stirnseite eine Öffnung zum Durchtritt des Fluids ausgebildet ist. Insbesondere ein Stirnelement, an dem ein Vorsprung und/oder eine Vertiefung an der Stirnfläche vorgesehen ist, kann vom Fluid mittels der Öffnung durchströmt werden. Bevorzugt ist die Öffnung endseitig am Vorsprung und/oder der Vertiefung ausgebildet. Durch die Ausbildung einer Öffnung im Bereich eines Vorsprungs oder einer Vertiefung kann mittels des Vorsprungs bzw. der Vertiefung eine Dichtfläche für eine Ausbildung einer gasdichten Verbindung der Öffnung mit einer anderen Öffnung einer weiteren Vorrichtung oder einer anderen Öffnung eines Anschlusselements bereitgestellt werden. Durch das strukturelle Element der Steckverbindung in Form eines Vorsprungs oder einer Vertiefung ergibt sich zwangsläufig eine Möglichkeit einer Abdichtung und eine Öffnung ist vorzugsweise in diesem Bereich angeordnet. Eine Öffnung kann von einem Rand eines Vorsprungs oder einer Vertiefung umgeben sein. Eine Öffnung kann beispielsweise randseitig beabstandet von einem Vorsprung oder von einer Vertiefung umgeben sein. Vorzugsweise ist die Größe einer Öffnung kleiner als die Grundfläche des Vorsprungs oder der Vertiefung, so dass eine Öffnung am Vorsprung oder der Vertiefung auch nicht teilweise in der Mantelfläche des Vorsprungs oder der Vertiefung ausgebildet ist. Die Öffnungen können einen beliebig geformten Rand aufweisen und können bevorzugt kreisförmig ausgebildet sein. Die Öffnungen können konzentrisch zur Grundfläche des Vorsprungs oder der Vertiefung ausgerichtet sein. In einer Ausführungsform können die mehreren Öffnungen die gleiche Größe aufweisen. Nicht an jedem Vorsprung und/oder Vertiefung muss eine Öffnung ausgebildet sein. Es kann vorgesehen sein, dass die Anzahl der Öffnungen der Anzahl von an der Stirnseite ausgebildeten Vorsprüngen und Vertiefungen entspricht; beispielsweise kann eine, zwei, drei, vier, fünf, sechs oder mehr Öffnungen vorgesehen sein, die entsprechend der außermittigen Anordnung der Vertiefung und/oder des Vorsprungs ebenfalls außermittig angeordnet sein können.

Erfindungsgemäß umfasst der Begriff "Dichtung" sowohl ein Dichtelement, das als O-Ring oder als flächenartig ausgebildetes Dichtelement ausgestaltet sein kann, als auch eine Dichtfläche, die in Anlage zu einem O-Ring oder der flächenartig ausgestalteten Dichtung bringbar ist. Im Falle von einem kreiszylinderförmigen Vorsprung kann ein O-Ring im Bereich der Mitte der Länge des Vorsprungs am Außenumfang des Vorsprungs angeordnet sein. Beispielsweise kann der O-Ring in einem Abstand von 0 mm bis 40 mm, bevorzugt von 0 mm bis 10 mm von der Stirnfläche am Vorsprung angeordnet sein.

In einer bevorzugten Ausführungsform weist die Vorrichtung an gegenüberliegenden Stirnflächen einen Vorsprung und/oder eine Vertiefung auf, so dass die Vorrichtung mit beiden Stirnflächen mittels einer Steckverbindung an beiden Enden mit je einem Element verbunden werden kann. Die Vorrichtung kann beispielsweise mit weiteren Vorrichtungen verbunden werden, die in Reihe hintereinander vom Fluid durchströmt werden können.

Es kann insbesondere vorgesehen sein, dass die Stirnseiten der Vorrichtung im Wesentlichen gleich ausgebildet sind, um die Herstellung der Vorrichtung zu vereinfachen. Die Vorrichtung weist dann zwei im Wesentlichen identische Stirnelemente auf, von denen je eines endseitig an einer seitlichen Außenwandung in Form einer Mantelfläche, die an den Stirnelementen randseitig anliegt, angeordnet ist. Die Orientierung der im Wesentlichen gleich ausgebildeten Stirnelemente ist bevorzugt derart, dass an den gegenüberliegenden Stirnseiten der Vorrichtung ein nach außen ragender Vorsprung auf einer Stirnseite einer nach außen gerichteten bzw. exponierten Vertiefung auf der anderen Stirnseite gegenüberliegt.

In einer bevorzugten Ausführungsform sind mindestens ein Vorsprung und mindestens eine Vertiefung alternierend auf einer Linie um den Mittelpunkt der Stirnseite angeordnet, wobei der Begriff "Linie" erfindungsgemäß eine geschlossene Linie um den Mittelpunkt der Fläche der Stirnseite umfasst, die eine beliebige Form haben kann. Die Form der Linie kann ellipsenförmig, kreisförmig, quadratisch oder polygonförmig sein. Vorzugsweise entspricht die Form der Linie im Wesentlichen einem Kreis, wodurch die Geometrie vereinfacht wird. Auf einem Kreis angeordnete Steckelemente können auch im Hinblick auf die Konstruktion und Herstellung der Vorrichtung einfacher ausgebildet werden.

In einer bevorzugten Ausführungsform sind mehrere Vorsprünge und/oder Vertiefungen in einem gleichen Abstand zu einem Mittelpunkt der Fläche winkeläquidistant angeordnet, so dass sich mehrere Rotationslagen ergeben können, in der die Vorrichtung mit einer korrespondierenden anderen Vorrichtung und/oder den am Deckel und/oder dem Boden des Behälters ausgebildeten Anschlusselementen und/oder einer Kartusche verbunden werden kann, insbesondere dann, wenn die andere Vorrichtung und/oder die am Deckel und/oder dem Boden des Behälters ausgebildeten Anschlusselemente und/oder die Kartusche korrespondierend ausgebildet ist. Bei den mehreren Vorsprüngen und/oder Vertiefungen in einem gleichen Abstand zu einem Mittelpunkt der Fläche, die winkeläquidistant angeordnet sind, kann es sich insbesondere um einen Vorsprung und zwei Vertiefungen handeln. Es können auch zwei Vorsprünge und eine Vertiefung vorgesehen sein. Die Vorsprünge und Vertiefungen können dabei alternierend angeordnet sein. Bevorzugt kann die Anzahl von Vertiefungen und Vorsprüngen gleich sein und eine Vertiefung ist benachbart zu zwei Vorsprüngen ausgebildet. In beispielhaften Ausführungsformen ist die Anzahl der Vorsprünge und der Vertiefungen jeweils zwei oder drei und Vorsprünge und Vertiefungen wechseln sich einander entlang einer kreisförmigen Linie um den Mittelpunkt ab. So kann eine Rotationsidentität mit einem Winkel von 180° bzw. 120° erreicht werden, was die Handhabung vereinfachen kann.

Die Vorrichtung ist eine Kartusche zur Aufnahme eines Trockenmittels Hierdurch kann eine einfache Ausgestaltung derart erzielt werden, dass an der Kartusche selbst die Steckelemente in Form von Vorsprung und/oder Vertiefung ausgebildet sein können. Auf die Verwendung von Adapter-, Anschluss- oder Modulelemente kann dann verzichtet werden.

Es wird beschrieben, dass in einem endseitigen Bereich der Vorrichtung zum Anordnen in einem Behälter eines Sorptionstrockners für ein Fluid mindestens ein in die Vorrichtung hereinragender Diffusor vorhanden ist, der von dem Fluid durchströmbar ist. Durch den Diffusor kann das Fluid gezielt verteilt werden und so besser in einen vorbestimmten Bereich der Vorrichtung gelangen, welches zu einer effizienteren Wirkungsweise für die Trocknung des Fluids und die Regeneration des Sorbens führen kann. Es kann über den Diffusor erreicht werden, dass das in die Vorrichtung einströmende Fluid umgelenkt wird. Es kann zu einer verbesserten Ausnutzung des beispielsweise in der Vorrichtung vorhandenen Trockenmittels kommen.

Vorzugsweise ist der Diffusor endseitig verschlossen und weist mindestens eine seitliche Diffusoröffnung auf, so dass das durch den Diffusor strömende Fluid seitlich umgelenkt und dabei gleichzeitig gezielt verteilt wird. Bei dem Eintritt des Fluids in die Vorrichtung kann somit erreicht werden, dass der eintretende Fluidstrom in die Vorrichtung in seitlicher Richtung umgelenkt und gezielt verteilt wird, um zu verhindern, dass das seitlich zur Eintrittsöffnung der Vorrichtung beispielsweise vorhandene Trockenmittel nicht durchströmt wird und sich Totgebiete für das strömende Fluid ergeben. Das Trockenmittel kann effizienter verwendet werden.

In einer bevorzugten Ausführungsform weist die mindestens eine seitliche Diffusoröffnung in ihrer Erstreckung in Richtung der Höhe des Diffusors einen nicht geradlinigen Verlauf auf, wodurch eine verbesserte Verteilung und damit eine verbesserte bzw. gleichmäßigere Durchströmung des Trockenmittels erreicht werden kann.

In einer bevorzugten Ausführungsform ist mindestens ein Diffusor an einem Teller angeordnet, der vorzugsweise in das Innere der Vorrichtung druckbeaufschlagt ist. Der druckbeaufschlagte Teller kann einen derartigen Druck auf das Trockenmittel ausüben, dass das Trockenmittel in der Kartusche unbeweglich ist. Die Druckbeaufschlagung des Tellers kann mittels einer zwischen dem Teller und dem Stirnelement der Kartusche ausgebildeten Druckfeder realisiert sein. Das Stirnelement kann eine Führung aufweisen, die das dem Stirnelement zugewandte Ende des Diffusors führen kann, um den Diffusor zu einer Durchtrittsöffnung im Wesentlichen fluchtend auszurichten. In einer bevorzugten Ausführungsform weist die Führung eine an das dem Stirnelement zugewandte Ende des Diffusors angepasste Form auf, die bei Annäherung des Tellers mit dem Diffusor in das dem Stirnelement zugewandte Ende eingreift. Auf dem Teller kann mehr als ein Diffusor befestigt sein. Es kann auch vorgesehen sein, dass die Diffusoren einstückig mit dem Teller ausgebildet sind. Jedem Diffusor kann eine Führung zugeordnet sein.

In einer bevorzugten Ausführungsform kann je ein Diffusor mit einer als Einlassöffnung ausgestalteten Durchtrittsöffnung in die Vorrichtung in Strömungsrichtung strömungsverbunden sein bzw. der Einlassöffnung zugeordnet sein. Es kann aber auch vorgesehen sein, dass eine Einlassöffnung in die Vorrichtung keinen Diffusor aufweist. Ein Diffusor kann auch an einem Auslass der Vorrichtung vorgesehen sein. Beispielsweise können in einer bevorzugten Ausführungsform an als Einlassöffnungen und an als Auslassöffnungen ausgestalteten Durchtrittsöffnungen Diffusoren angeordnet sein, so dass es keine Vorzugsrichtung beim Einbau hinsichtlich Einlassöffnungen und Auslassöffnungen gibt; die Handhabung ist diesbezüglich vereinfacht, da es ein "Oben" und "Unten" der Vorrichtung nicht gibt. Es kann vorgesehen sein, dass ein Diffusor mit einer in einem Vorsprung und/oder einer Vertiefung ausgebildeten Ein- oder Auslass-öffnung bzw. -kanal in Strömungsrichtung des Fluids verbunden ist bzw. diesem zugeordnet ist.

Es wird beschrieben, dass eine Vorrichtung zum Anordnen in einem Behälter eines Sorptionstrockners für ein Fluid einen die Handhabung verbessernden Kranz aufweist, mit dem die Vorrichtung beispielsweise während des Einsetzens auf einer korrespondierenden Fläche abgesetzt werden kann. Beispielsweise kann ein Kranz dazu verwendet werden, dass die Vorrichtung zwischenzeitlich beim Einsetzen in den Behälter an einer am Behälter kopfseitig vorgesehenen Ablage - die in ihrer einfachsten Ausgestaltung als randseitiger Vorsprung am kopfseitigen Bereich des Behälters ausgestaltet sein kann - abgesetzt werden kann. Die Ablage kann sowohl beim Einsetzen als auch bei der Entnahme der Vorrichtung aus dem Behälter zur Ablage verwendet werden. Die Vorrichtung umfasst dazu an mindestens einem endseitigen Bereich einen Kranz, der mindestens zwei Teilabschnitte aufweist, die entlang des Umfangs der Vorrichtung verlaufen, wobei sich die Teilabschnitte zumindest teilweise von der Außenwandung der Vorrichtung weg erstrecken. Die Teilabschnitte erstrecken sich in mindestens einem Abschnitt unter einem Winkel, vorzugsweise in einem Winkel nahe im Wesentlichen 90°, von der seitlichen Außenwandung weg. Für die Bereitstellung der Ablagefunktion erstrecken sich die Teilabschnitte in radialer Richtung, d.h. senkrecht zur Längsrichtung der Vorrichtung bzw. senkrecht zur Längsrichtung des Behälters, von der seitlichen Außenwandung der Vorrichtung weg. Die Teilabschnitte können ein Profil aufweisen; die Form des Profils kann beliebig sein. Durch die abschnittsweise Ausbildung des Kranzes in mehrere Teilabschnitte, die durch freie Bereiche unterbrochen sind, kann die Vorrichtung auf eine randseitige Ablagefläche aufgelegt werden. Die Ablagefläche ist vorzugsweise entsprechend der Teilung in Teilabschnitte des Kranzes ausgebildet, wodurch durch Rotation der Kranz zur Ablagefläche so ausgerichtet werden kann, dass eine ebenfalls aus Teilabschnitten aufweisende Ablagefläche so zum Kranz orientiert ist, dass die Teilabschnitte durch entsprechende freie Abschnitte der Ablagefläche hindurchgeführt werden können. Bevorzugt ist eine endseitig am Behälter vorgesehene Ablagefläche nicht zwangsläufig komplementär zum an der Vorrichtung ausgebildeten Kranz ausgebildet, sondern die Ablagefläche an der Öffnung des Behälters des Sorptionstrockners kann auch größere Freiabschnitte als die Teilabschnitte des Kranzes aufweisen.

In einer bevorzugten Ausführungsform ist die Vorrichtung vom Fluid durchströmbar und die Vorrichtung ist eine Kartusche zur Aufnahme des Trockenmittels oder ein Adapter-, Anschluss- oder Modulelement zum Anschluss an einen Einlass und/oder Auslass in den Behälter und/oder an eine Kartusche. Hierdurch wird eine Flexibilität erreicht, so dass die Kartusche selbst oder ein Verbindungselement in Form der Adapter-, Anschluss- oder Modulelemente, die mit einer Kartusche verbunden werden können, auf einer Ablagefläche kurzzeitig bei einem Einführen in den Behälter oder einem Herausziehen aus dem Behälter abgelegt werden kann. Der Kranz kann insbesondere an einem Stirnelement der Vorrichtung ausgebildet sein, insbesondere kann der Kranz einstückig mit der stirnseitigen Außenwand der Vorrichtung bzw. dem Stirnelement der Vorrichtung ausgebildet sein.

In einer bevorzugten Ausführungsform erstreckt sich der Kranz von der Außenwandung der Vorrichtung in radialer Richtung, d.h. senkrecht zur Längsrichtung der Vorrichtung bzw. senkrecht zur Längsrichtung des Behälters, ungefähr 0,5 mm bis 10 mm von der seitlichen Außenwandung weg.

Es wird beschrieben, dass eine unterschiedliche Strömungsverteilung mittels der Vorrichtung zum Anordnen in einem Behälter eines Sorptionstrockners für ein Fluid erreicht wird. Hierzu umfasst die Vorrichtung einen Fluidteiler, der mehrere Verteilungsöffnungen aufweist, die eine unterschiedliche Fläche haben. Es kann durch den Fluidteiler erreicht werden, dass den Strömungsbedingungen im Sorptionstrockner Rechnung getragen wird, indem die Strömungsverteilung an sogenannte Geschwindigkeits-"Hot Spots" angepasst ist. Eine Vergleichmäßigung der Strömung durch das Sorbens kann erreicht werden. Die Effizient des Sorptionstrockners kann erhöht werden.

Es wird beschrieben, dass eine unterschiedliche Strömungsverteilung anlagenseitig, d.h. auf Seiten des Sorptionstrockners, erreicht werden kann. Hierzu weist der Behälter stirnseitig einen Fluidteiler auf, der mehrere Verteilungsöffnungen umfasst, die eine unterschiedliche Fläche haben. Es kann durch den Fluidteiler erreicht werden, dass den Strömungsbedingungen im Sorptionstrockner, d.h. insbesondere hinsichtlich der

Geometrie des Strömungspfades vor dem Eintritt in den Behälter, Rechnung getragen wird, indem die Strömungsverteilung an sogenannte Geschwindigkeits-"Hot Spots" angepasst ist. Eine Vergleichmäßigung der Strömung durch das Sorbens kann unabhängig von in den Behälter einzusetzenden Vorrichtungen erreicht werden. Die Effizienz des Sorptionstrockners kann unabhängig von den einzusetzenden Vorrichtungen erhöht werden. Vorzugsweise ist der Fluidteiler an einem Anschlusselement des Behälters für eine in den Behälter einzusetzende Vorrichtung ausgestaltet. Das Anschlusselement kann stirnseitig in den Behälter eingesetzt werden. Das Anschlusselement ist vorzugsweise mit einem Boden oder einem Deckel des Behälters fest verbunden. Insbesondere der Deckel mit dem Anschlusselement kann lösbar mit dem Behälter verbunden sein, um eine Vorrichtung in den Behälter einsetzen zu können.

Es wird beschrieben, dass eine einfache Ausbildung der Vorrichtung zum Anordnen in einem Behälter eines Sorptionstrockners für ein Fluid geschaffen werden soll, bei der eine Außenwandung der Vorrichtung vorgesehen ist, die endseitig an ein Stirnelement der Vorrichtung rolliert ist. Eine einfache Herstellung der Vorrichtung ist möglich, bei der eine Außenwandung beliebiger Formgebung ausgebildet werden kann, wobei ein Stirnelement in die Außenwandung endseitig eingebracht wird, und die Außenwandung mittels Rollieren an das Stirnelement in Anlage gebracht wird. Vorzugsweise weist das Stirnelement eine umfangsseitige Dichtung auf, die als Dichtfläche und/oder als ein in einer Dichtaufnahme angeordnetes Dichtmittel ausgestaltet ist. Beispielsweise kann das Stirnelement eine umfangsseitig angeordnete Aufnahme für einen O-Ring aufweisen. Hierdurch ist eine einfache dichtende Verbindung zwischen Außenwandung und Stirnelement möglich.

In einer bevorzugten Ausführungsform ist die Vorrichtung, bei der die Außenwandung endseitig an ein Stirnelement rolliert ist, als Kartusche zur Aufnahme des Trockenmittels oder ein Adapter-, Anschluss- oder Modulelement zum Anschluss an einen Einlass und/oder Auslass des Behälters und/oder an die Kartusche ausgebildet.

Die vorgenannten Aspekte sind in ihrer allgemeinen Ausgestaltung in den geschilderten bevorzugten Ausführungsbeispielen frei miteinander kombinierbar. Jeder der genannten Aspekte kann allgemein und/oder in einer speziellen genannten Ausführung mit einem oder mehreren der genannten anderen Aspekte kombiniert werden. Eine Kombination erstreckt sich auch auf die im Nachfolgenden genannten konkreten Ausführungsbeispiele der einzelnen Aspekte. Die Aspekte widersprechen sich nicht, so dass keine Kombination ausgeschlossen ist, sondern vielmehr jede Kombination gewünscht ist, da sich ergänzende Vorteile ergeben.

Ferner schafft die Erfindung ein System mit einer Vorrichtung nach einem oder mehreren der genannten Aspekte und einem Sorptionstrockner für ein Fluid, der einen Behälter aufweist, in den eine Kartusche zur Aufnahme eines Trockenmittels einsetzbar ist. Der Behälter kann einen Fluidteiler aufweisen.

In einem weiteren Aspekt sieht die Erfindung einen Behälter eines Sorptionstrockners für ein Fluid vor, in den eine Kartusche zur Aufnahme eines Trockenmittels einsetzbar ist, wobei der Behälter ein Anschlusselement mit einer Anschlussseite aufweist, die zum Zusammenwirken mit einer Stirnseite einer Kartusche vorgesehen ist, wobei die Anschlussseite mindestens einen Vorsprung und/oder mindestens eine Vertiefung aufweist, wobei der Vorsprung und/oder die Vertiefung außermittig auf der Anschlussseite angeordnet ist. Ein solcher Behälter erlaubt es, die Vorzüge der erfindungsgemäßen Vorrichtung zu nutzen, in dem eine erfindungsgemäße Vorrichtung in den Behälter eingesetzt wird.

Insbesondere bevorzugt sind der Vorsprung und/oder die Vertiefung im Bereich einer Öffnung zum Durchströmen mit Fluid ausgebildet.

Ein in dieser Weise ausgeführter, erfindungsgemäßer Behälter erlaubt es aber nicht nur, mit erfindungsgemäßen Vorrichtungen zusammenzuwirken. Der erfindungsgemäße Behälter kann auch so ausgeführt sein, dass er eine Mehrzahl von Vorsprüngen aufweist und eine Vorrichtung mit mindestens einer stirnseitigen Vertiefung in den Behälter eingesetzt ist, die so ausgeführt ist, dass die Vertiefung mindestens zwei behälterseitige Vorsprünge aufnimmt. Dadurch kann die Zahl der an der Stirnseite der Vorrichtung vorzusehenden Vertiefungen und damit die Herstellungskosten reduziert werden. Insbesondere bevorzugt wird an der Vorrichtung nur eine einzige Vertiefung vorgesehen, die alle behälterseitigen Vorsprünge aufnimmt.

Das erfindungsgemäße Verfahren zum Herstellen einer erfindungsgemäßen Vorrichtung, die vom Fluid durchströmbar und eine Kartusche ist, in der ein Trockenmittel angeordnet ist, sieht vor, dass eine erfindungsgemäße Vorrichtung, die vom Fluid durchströmbar ist und eine Kartusche ist, in der ein erstes Trockenmittel angeordnet ist, geöffnet wird, das erste Trockenmittel zumindest teilweise entnommen wird und ein zweites Trockenmittel in die Kartusche eingebracht wird. Damit erlaubt es das erfindungsgemäße Verfahren, auf einfache Weise aus einer ersten erfindungsgemäßen Vorrichtung, die ein erstes, für einen gewünschten Einsatzzweck nicht oder nicht mehr geeignetes Trockenmittel enthält, mit einem zweiten, für den gewünschten Einsatzzweck geeigneten Trockenmittel zu versehen und damit eine für den gewünschten Einsatzzweck geeignete, erfindungsgemäße Vorrichtung herzustellen. Dabei können das erste und das zweite Trockenmittel auch des gleichen Typs sein und sich beispielsweise dadurch unterscheiden, dass das erste Trockenmittel im Verhältnis zum zweiten Trockenmittel bereits gealtert ist (beispielsweise durch Nutzung).

Die Erfindung bezieht sich insbesondere auch auf eine nach diesem Verfahren hergestellte Vorrichtung.

Ebenso bezieht sich die Erfindung auf die Verwendung einer erfindungsgemäßen Vorrichtung in einem erfindungsgemäßen System.

Die Erfindung wird nachfolgend anhand von in den Zeichnungen dargestellten Ausführungsbeispielen näher erläutert.

In den Zeichnungen zeigt:
- Fig. 1: eine schematische Darstellung eines Ausführungsbeispiels eines Sorptionstrockners mit zwei Behältern und zwei erfindungsgemäßen Vorrichtungen;
- Fig. 2: eine schematische Seitenansicht eines Behälters gemäß Fig. 1 mit in dem Behälter angeordneten als Kartuschen ausgestalteten Vorrichtungen in einer teilweise geschnittenen Darstellung;
- Fig. 3: eine isometrische Darstellung eines endseitigen Bereichs einer als Kartusche ausgebildeten Vorrichtung, wie sie in Fig. 2 dargestellt ist;
- Fig. 4: eine schematische Seitenansicht eines endseitigen Bereichs einer als Kartusche ausgebildeten Vorrichtung gemäß Fig. 3 in teilweise geschnittener Darstellung;
- Fig. 5: eine schematische Seitenansicht eines endseitigen Bereichs einer Ausführungsform der in Fig. 3 dargestellten als Kartusche ausgestalteten Vorrichtung in teilweise geschnittener Darstellung mit in den Innenraum ragenden Diffusoren;
- Fig. 6: eine schematische isometrische Detailansicht im Bereich der Verbindung zwischen zwei Vorrichtungen gemäß Fig. 5 ohne eine seitliche Außenwandung der Vorrichtungen;
- Fig. 7: eine schematische Seitenansicht einer Ausführungsform im Bereich der Verbindung zwischen zwei der Vorrichtungen gemäß Fig. 5 ohne eine seitliche Außenwandung der Vorrichtungen;
- Fig. 8: eine schematische isometrische Detailansicht einer Ausführungsform eines oberen Randbereichs des Behälters gemäß Fig. 1 und einem Endbereich einer als Kartusche ausgestalteten Vorrichtung gemäß Fig. 3;
- Fig. 9: eine schematische isometrische Detailansicht einer Ausführungsform eines kopf- oder bodenseitig angeordneten Anschlusselements des Behälters gemäß Fig. 1;
- Fig. 10: eine schematische isometrische Teil-Ansicht eines im bodenseitigen Bereich des Behälters gemäß Fig. 1 ausgestalteten Anschlusselements des Sorptionstrockners;
- Fig. 11: eine schematische Teil-Ansicht von der Seite auf einen endseitigen Bereich einer als Kartusche ausgebildeten Vorrichtung gemäß Fig. 3 in einer teilweise geschnittenen Darstellung; und
- Fig. 12: eine schematische, geschnittene Ansicht einer weiteren Ausführungsform der Erfindung, bei der ein Behälter eines Sorptionstrockners für ein Fluid mit einer Mehrzahl von Vertiefungen und Vorsprüngen an einer Anschlussfläche mit einer erfindungsgemäßen Vorrichtung zusammenwirkt, die nur eine einzige Vertiefung aufweist, die alle behälterseitigen Vorsprünge aufnimmt.

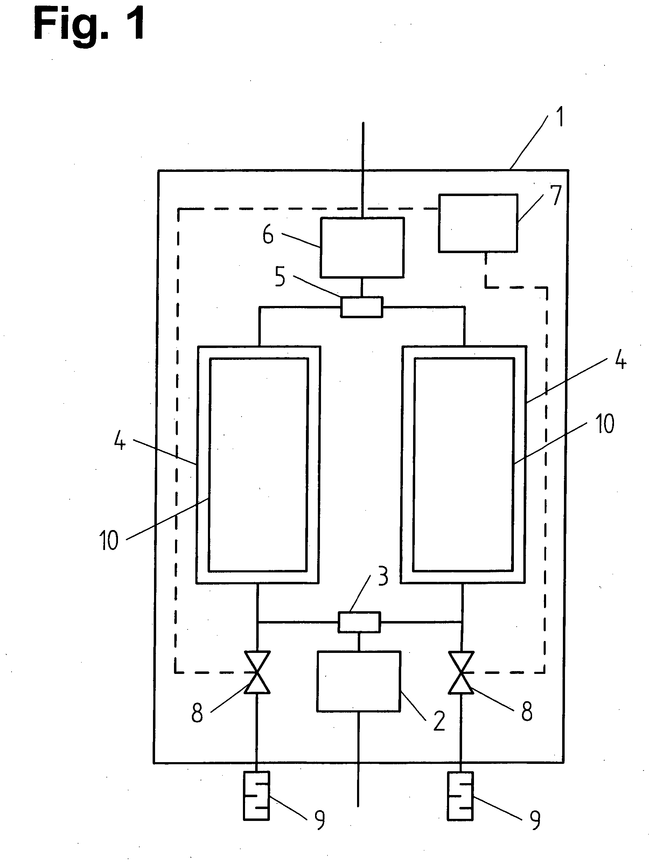

Fig. 1 zeigt ein Ausführungsbeispiel eines Sorptionstrockners für ein Fluid. Die Vorrichtung weist ein Gehäuse 1 auf, in dem ein Strömungspfad für das mit Druck beaufschlagte Fluid ausgebildet ist. Einem Einlass folgend ist ein für das Entziehen von Partikeln und Kondensat aus dem Fluid vorgesehener Vorfilter 2 angeordnet. Stromabwärts ist ein dem Vorfilter 2 nachfolgendes Wechselventil 3 vorgesehen. Dem Wechselventil 3 folgen stromabwärts jeweils in zwei zueinander parallelen Strömungspfaden in den Rohrleitungen Behälter 4. In den Behälter 4 ist jeweils eine als Kartusche ausgebildete Vorrichtung 10 zur Aufnahme eines Trockenmittels einsetzbar. Ferner folgt dem Wechselventil 3 ein Magnetventil 8, mit dem eine Verbindung über einen Schalldämpfer 9 mit der Umgebung herstellbar ist.

Dem Behälter 4 folgt ein Wechselventil 5. Dem Wechselventil 5 folgt stromabwärts ein Nachfilter 6, in dem Abrieb aus dem Trockenmittel zurückgehalten werden kann. Dem Nachfilter 6 folgt der Auslass des Sorptionstrockners, von dem das mit Druck beaufschlagte Fluid trocken und rein in ein Fluidversorgungsnetz zur Anwendung gelangen kann.

Der Sorptionstrockner weist gemäß dem in Fig. 1 dargestellten Ausführungsbeispiel eine Kontrolleinheit 7 auf, die Signaleingänge und Signalausgänge aufweist. Die Kontrolleinheit 7 steuert die Magnetventile 8. Ferner kann das Signal eines in Strömungsrichtung zwischen Wechselventil 5 und Nachfilter 6 angeordneten Sensors, der zur Ermittlung der Feuchte des Fluids ausgestaltet ist, erfasst werden. Die Kontrolleinheit 7 kann Zustände des Sorptionstrockners erfassen, beobachten und/oder steuern.

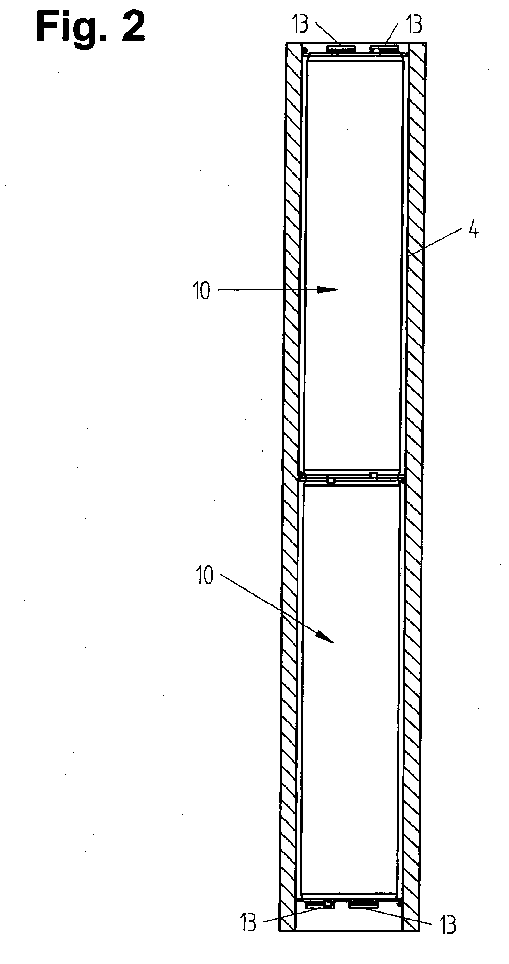

In Fig. 2 ist einer der Behälter 4 dargestellt, in dem zwei als Kartuschen ausgestalteten Vorrichtungen 10 aufeinanderfolgend angeordnet sind, in denen sich Trockenmittel befindet. Die Vorrichtung 10 ist erfindungsgemäß als Vorrichtung zum Anordnen in dem Behälter 4 ausgebildet. Zwei der Vorrichtungen 10 sind miteinander verbunden in den Behälter 4 eingesetzt. Der Behälter 4 weist eine Zylinderform mit kreisförmigem Querschnitt auf.

Die in Fig. 2 dargestellten Vorrichtungen 10 weisen an der Stirnseite der Vorrichtungen 10 Vorsprünge und Vertiefungen auf, mittels derer die Vorrichtungen 10 zusammengesteckt sind. In der Darstellung der Figur 2 sind die Vorsprünge 13 an der nach oben gerichteten Stirnseite der oberen Vorrichtung 10 und an der nach unten gerichteten Stirnseite der unteren Vorrichtung 10 zu erkennen.

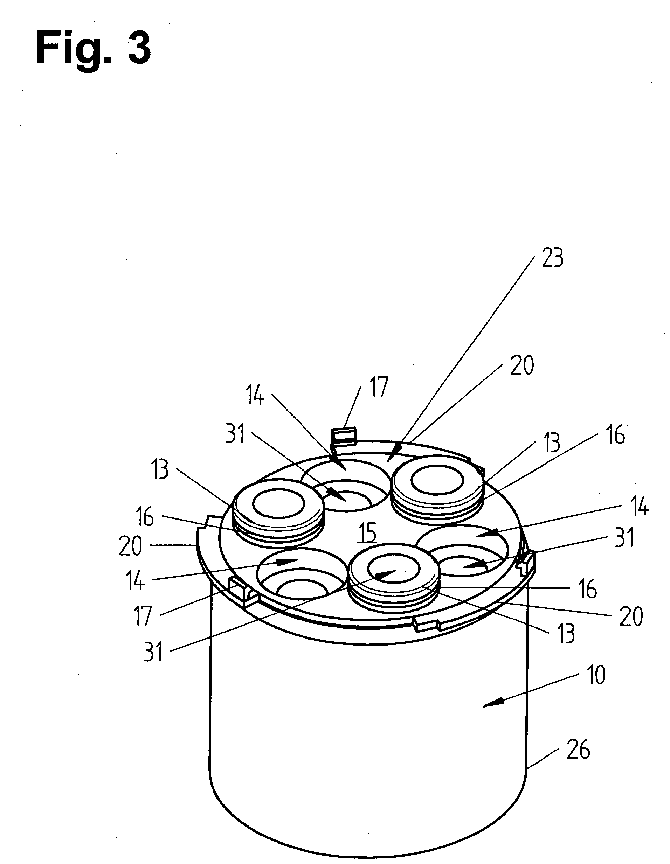

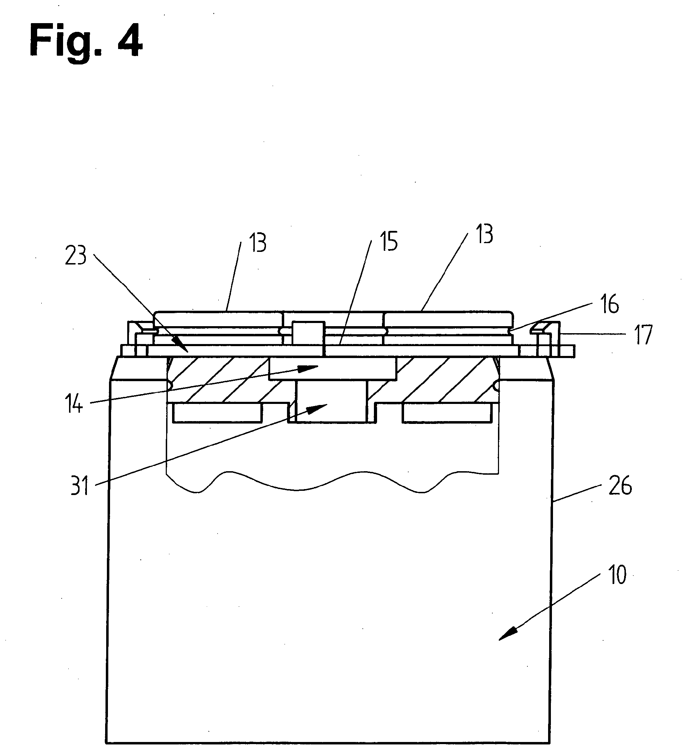

In den Fig. 3 und 4 ist ein endseitiger Bereich der Vorrichtung 10 dargestellt. Die Vorrichtung 10 weist in dem dargestellten endseitigen Bereich ein mit einer seitlichen Außenwandung 26 der Vorrichtung 10 verbundenes Stirnelement 23 auf. Das Stirnelement 23 umfasst eine stirnseitige Fläche 15, auf der drei Vorsprünge 13 und drei Vertiefungen 14 ausgebildet sind. Die Vorsprünge 13 sind kreisringförmig ausgestaltet. Die Vertiefungen 14 sind als kreisförmige Aussparungen in der Fläche 15 des Stirnelements 23 ausgebildet. An den Vorsprüngen 13 und den Vertiefungen 14 sind kreisförmige Öffnungen 31 ausgebildet, die das Stirnelement 23 durchtreten. Eine Öffnung 31 ist konzentrisch zu einem Vorsprung 13 bzw. einer Vertiefung 14 ausgerichtet. Mit den Öffnungen 31 stellen die Vorsprünge 13 und die Vertiefungen 14 Kanäle zum Durchtritt des Stirnelements 23 in die Vorrichtung 10 dar.

Die Vorsprünge 13 einer Vorrichtung 10 können in die Vertiefungen 14 einer weiteren Vorrichtung 10 eingesteckt werden. Für eine dichtende Verbindung zwischen den Vorsprüngen 13 bzw. den Vertiefungen 14 weisen die Vorsprünge 13 eine Dichtung in Form eines O-Rings auf, der an einer nutförmigen Aussparung 16 randseitig um den Vorsprung 13 fixiert ist.

Die Vorsprünge 13 und die Vertiefungen 14 sind an der Stirnfläche 15 der Vorrichtung 10 winkeläquidistant mit gleichem Abstand zum Mittelpunkt der Stirnfläche 15 alternierend ausgebildet.

Es sind Rastnasen 17 stirnseitig an der Vorrichtung 10 ausgebildet, mit denen die Steckverbindung lösbar fixiert werden kann, wenn eine Rastnasen 17 in Eingriff mit je einer entsprechenden Rastung gelangt.

Bei dem in den Fig. 3 und 4 dargestellten Ausführungsbeispiel ist jedem Vorsprung 13 und jeder Vertiefung 14 eine bodenseitige Öffnung 31 zugeordnet, mittels der das Stirnelement 23 vom Fluid durchströmbar ist.

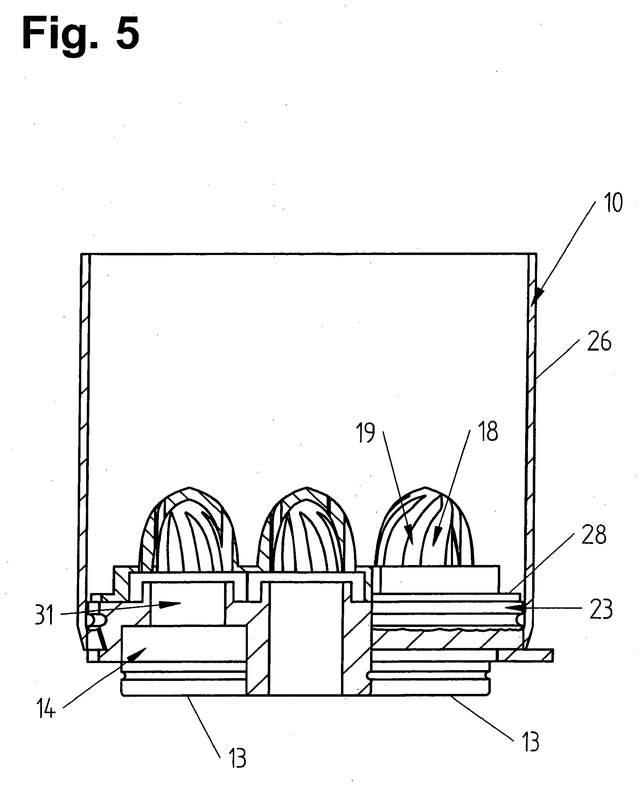

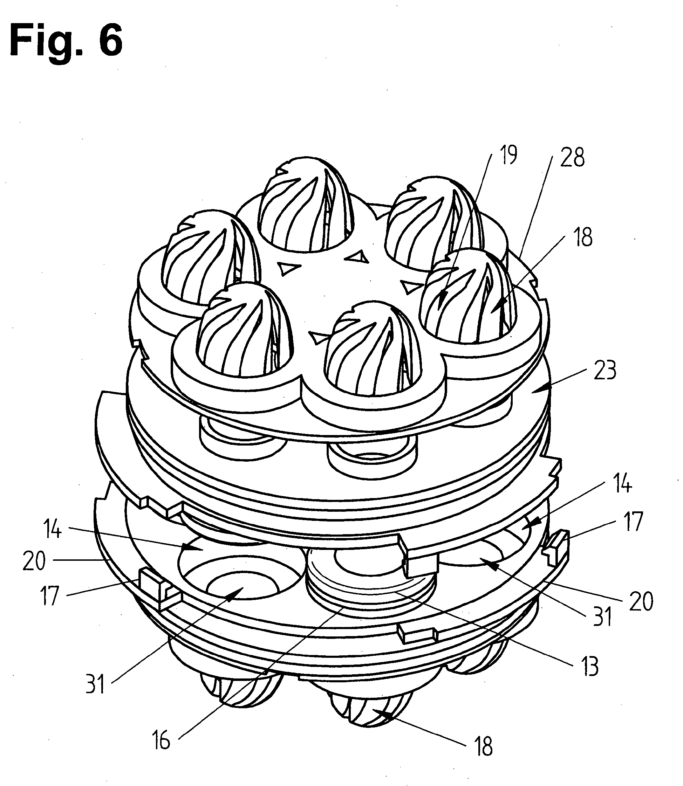

In den Fig. 5 bis 7 ist dargestellt, dass in den Vorsprüngen 13 und Vertiefungen 14 Kanäle mit Durchtrittsöffnungen ausbildbar sind, an die sich ein in das Innere der Vorrichtung 10 erstreckender Diffusor 18 anschließen kann. Der Diffusor 18 ist mittig zur Öffnung 31 angeordnet.

Das Fluid kann durch die in den Vertiefungen 14 und den Vorsprüngen 13 ausgebildeten Öffnungen 31 in die Vorrichtung 10 eintreten und wird mittels des Diffusors 18 verwirbelt. Die Verwirbelung erfolgt vornehmlich zur Seite, so dass ein in die Vorrichtung 10 eintretendes Fluid zu den Seiten abgelenkt wird. Der Diffusor 18 ist dazu endseitig verschlossen und weist mindestens eine seitliche Diffusoröffnung 19 auf, die in ihrer Erstreckung in Richtung der Höhe des Diffusors 18 nicht geradlinig verläuft. Die seitliche Diffusoröffnung 19 weist zumindest einen Abschnitt auf, der sich nicht linear in Längsrichtung des Diffusors 18 erstreckt.

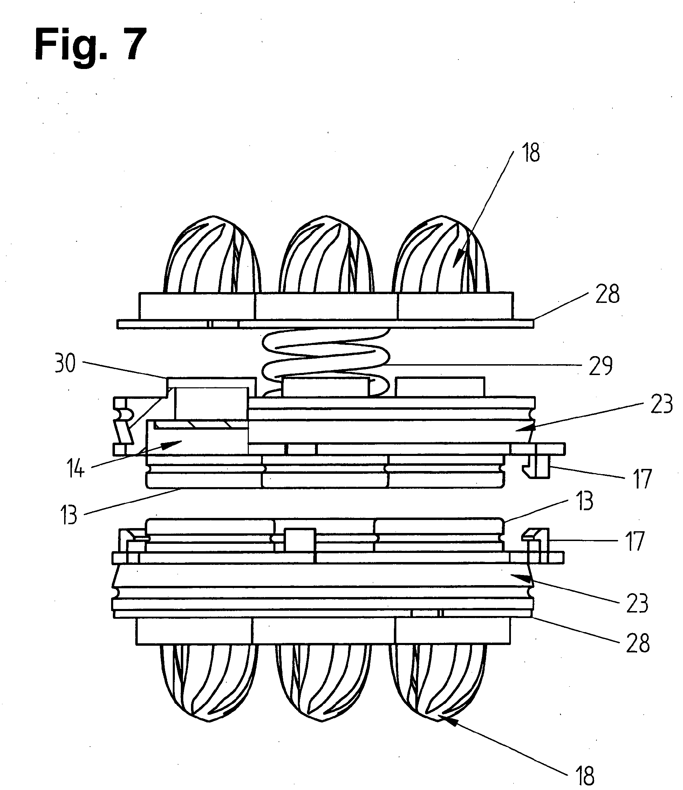

Die Diffusoren 18 sind auf einem Teller 28 angeordnet. In dem in Fig. 7 dargestellten Ausführungsbeispiel ist der Teller 28 gegenüber dem Stirnelement 23 mittels einer Druckfeder 29 von dem Stirnelement 23 weg in Richtung in das Innere der Vorrichtung 10 federbeaufschlagt. In Figur 7 ist für den endseitigen Bereich der oberen Vorrichtung 10 und den endseitigen Bereich der unteren Vorrichtung 10 der Fig. 2 ein unterschiedlicher Abstand des Tellers 28 mit den Diffusoren 18 vom Stirnelement 23 dargestellt. An der oberen der beiden Vorrichtungen 10 ist zu sehen, dass am Stirnelement 23 Führungen 30 vorgesehen sind, die sich in Richtung des Inneren der Vorrichtung 10 erstrecken und mit denen das dem Stirnelement 23 zugewandte Ende des Diffusors 18 in Eingriff bringbar ist, sofern der Teller 28 gegen das Stirnelement 23 gedrückt wird. Auf diese Weise können die Diffusoren 18 zu den in den Vorsprüngen 13 und Vertiefungen 14 ausgebildeten Eintrittsöffnungen ausgerichtet werden.

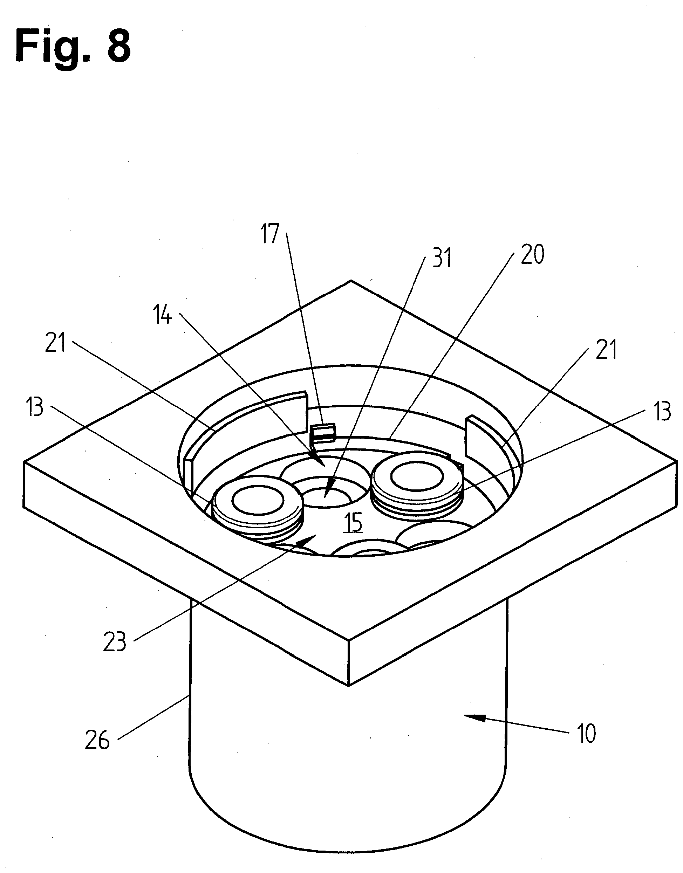

In der Fig. 8 ist mit dem Bezugszeichen 20 je ein Teilabschnitt eines Kranzes an der als Kartusche ausgebildeten Vorrichtung 10 bezeichnet. Der Kranz mit den Teilabschnitten 20 ist an beiden Endseiten umfangsseitig der Vorrichtung 10 ausgebildet. Der Kranz ist einstückig mit dem Stirnelement 23 ausgestaltet. Die Teilabschnitte 20 sind entlang eines Abschnitts des Umfangs der Vorrichtung auf im Wesentlichen einer Ebene ausgebildet. Die Teilabschnitte 20 erstrecken sich zumindest teilweise von der Außenwandung 26 der Vorrichtung 10 weg. Der Kranz bildet den größten Umfang der Vorrichtung 10. Die Teilabschnitte 20 des Kranzes können auf einen kopfseitigen Rand des Behälters 4 abgelegt werden. Im in der Figur 8 dargestellten Ausführungsbeispiel ist ein an den Kranz angepasster Rand kopfseitig am Behälter 4 ausgebildet. Die Teilung der Teilabschnitte 20 des Kranzes entspricht einer Teilung einer im Randbereich des Behälters 4 ausgebildeten Ablagefläche 21. Die Vorrichtung 10 kann mit den Teilabschnitten 20 des Kranzes auf der Ablagefläche 21 abgelegt werden. Durch Rotation der Vorrichtung 10 kann der Kranz bzw. die Teilabschnitte 20 derart verdreht werden, dass die Teilabschnitte 20 des Kranzes mit freien Durchbrüchen der Ablagefläche 21 fluchten und die Vorrichtung 10 in den Behälter 4 eingeführt wird.

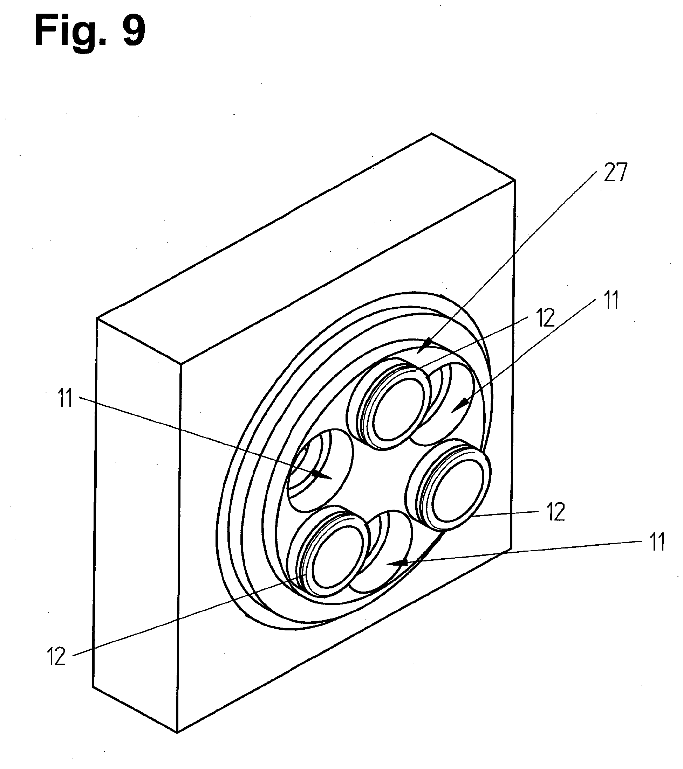

Die Fig. 9 zeigt ein Anschlusselement 27 das stirnseitig an dem Behälter 4 angeordnet werden kann. Das Anschlusselement 27 kann in einem Deckel oder einem Boden des Behälters 4 ausgebildet oder mit diesem verbunden sein. Sofern das Anschlusselement 27 als Teil des Deckels des Behälters 4 vorgesehen ist, so ist das Anschlusselement 27 zusammen mit dem Deckel zur Entnahme bzw. Einsetzen der Vorrichtung 10 entfernbar. An dem Anschlusselement 27 sind zu den Vorsprüngen 13 und Vertiefungen 14 der Vorrichtung 10 korrespondierend ausgebildete Vertiefungen 11 und Vorsprünge 12 ausgestaltet, die Durchtrittsöffnungen für das Fluid aufweisen.

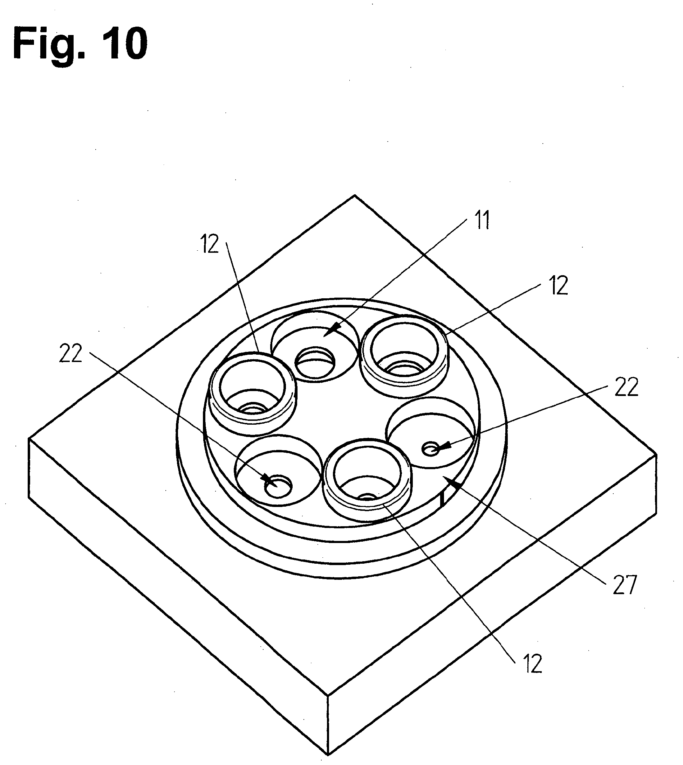

In Fig. 10 ist dargestellt, dass am endseitigen Ende im Kopf- oder Bodenbereich des Behälters 4 das Anschlusselement 27 eine Kanalgeometrie aufweist, die einem Fluidteiler, der das strömende Fluid mengenmäßig verteilt, entspricht. In dem in Fig. 10 dargestellten Anschlusselement 27 sind an den Vertiefungen 11 und Vorsprüngen 12 Verteilungsöffnungen 22 ausgebildet, die konzentrisch zu den Vorsprüngen 12 und Vertiefungen 11 ausgestaltet sind. Die Verteilungsöffnungen 22 weisen eine unterschiedliche Querschnittsfläche auf. Die Verteilungsöffnungen 22 sind vorzugsweise kreisrund mit unterschiedlichen Radien ausgebildet. Die Größe der Verteilungsöffnungen 22 kann an die Strömungsbedingungen im Sorptionstrockner angepasst sein. Insbesondere kann die Größe der Verteilungsöffnungen 22 aufgrund einer ermittelten Geschwindigkeitsverteilung des Fluids, verursacht durch den Strömungsverlauf des Fluids, im Sorptionstrockner vorbestimmt gewählt werden.

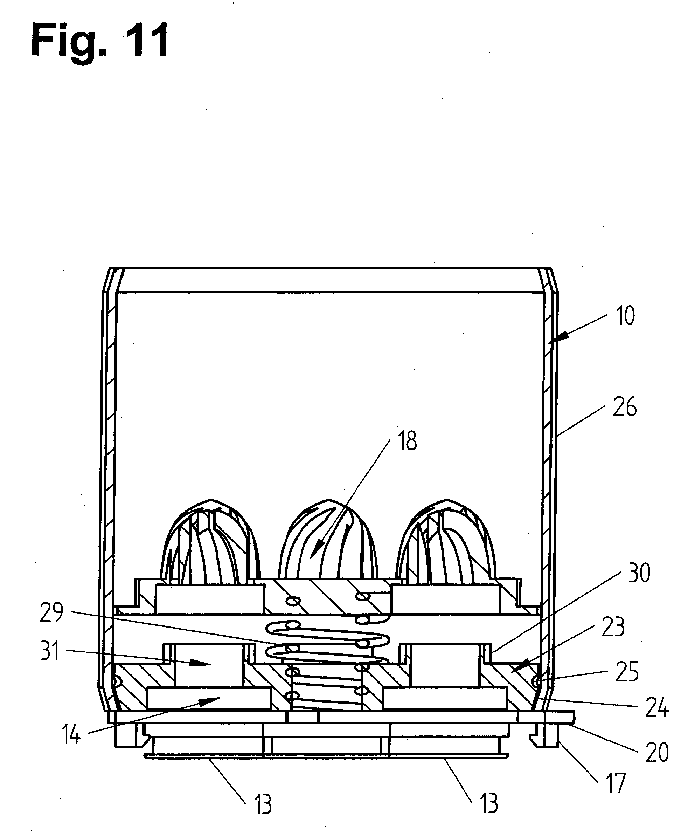

Fig. 11 zeigt schematisch einen Endbereich der Vorrichtung 10 mit der seitlichen Außenwandung 26 der Vorrichtung 10. Die Außenwandung 26 ist mit dem Stirnelement 23 der Vorrichtung 10, an dem die Vorsprünge 13 und Vertiefungen 14 ausgebildet sind, sowie der Kranz ausgestaltet ist, verbunden. Das Stirnelement 23 weist eine umfangsseitige Fase 24 auf, gegen die die seitliche Außenwandung 26 der Vorrichtung 10 rolliert ist. Zur dichtenden Verbindung ist an dem Stirnelement 23 eine Aufnahme 25 für einen O-Ring ausgebildet, mit dem die seitliche Außenwandung 26 der Vorrichtung 10 eine dichtende Verbindung herstellt.

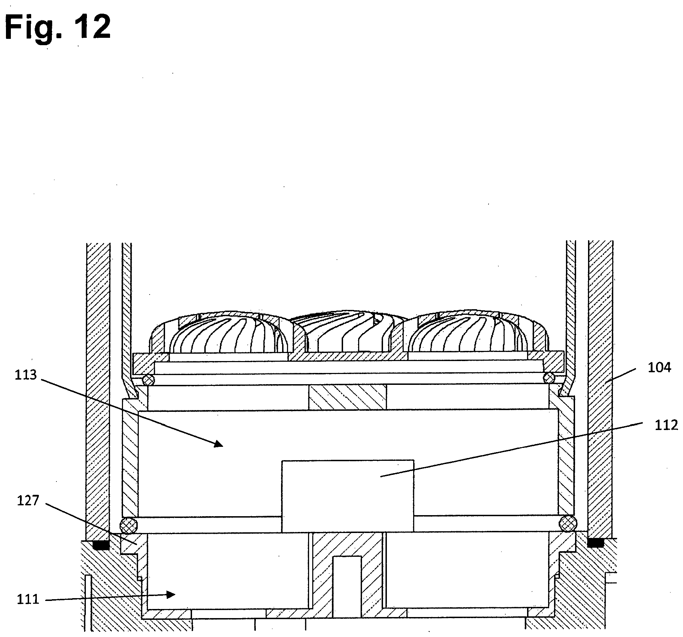

Die Fig. 12 zeigt, dass ein Behälter 104 eines Sorptionstrockners für ein Fluid mit einem Anschlusselement 127 mit einer Mehrzahl von Vertiefungen 111 und Vorsprüngen 112 an einer Anschlussfläche mit einer Ausführungsform der erfindungsgemäßen Vorrichtung zusammenwirken kann, die nur eine einzige Vertiefung 113 aufweist, die alle behälterseitigen Vorsprünge 112 aufnimmt. Dadurch kann die Anzahl der Vertiefungen an der Vorrichtung reduziert und somit die Herstellungskosten für die Vorrichtung reduziert werden.

## Patentansprüche

1. Vorrichtung (10) zum Anordnen in einem Behälter (4) eines Sorptionstrockners für ein Fluid, wobei in den Behälter (4) eine Kartusche zur Aufnahme eines Trockenmittels einsetzbar ist, **dadurch gekennzeichnet, dass** die Vorrichtung (10) eine Kartusche zur Aufnahme des Trockenmittels ist, und dass die Vorrichtung (10) eine erste Stirnseite und eine zweite Stirnseite und eine seitliche Außenwandung aufweist, wobei die zweite Stirnseite der ersten Stirnseite gegenüberliegt und von der ersten Stirnseite fortweist, und an beiden Stirnseiten Durchgangsöffnungen zum Durchtritt des Fluids ausgebildet sind, wobei die Vorrichtung (10) an
einer Stirnseite mindestens einen Vorsprung (13) aufweist, wobei der Vorsprung (13) außermittig auf der Stirnseite als Stecker für eine Steckverbindung ausgebildet ist und an dem Vorsprung eine Öffnung zum Durchtritt des Fluids ausgebildet ist,
und/oder
die Vorrichtung (10) an einer Stirnseite mindestens eine Vertiefung (14) aufweist, wobei die Vertiefung (14) außermittig auf der Stirnseite als Buchse einer Steckverbindung ausgebildet ist und in der Vertiefung eine Öffnung zum Durchtritt des Fluids ausgebildet ist.

2. Vorrichtung (10) nach Anspruch 1, **dadurch gekennzeichnet, dass** mehrere Öffnungen (31) der Vorrichtung zum Durchströmen mit Fluid an der Stirnseite ausgebildet sind, die jeweils an einem Vorsprung (13) oder in einer Vertiefung (14) angeordnet sind.

3. Vorrichtung (10) nach einem der Ansprüche 1 oder 2, **dadurch gekennzeichnet, dass** an dem mindestens einen Vorsprung (13) und/oder an der mindestens einen Vertiefung (14) ein Dichtelement ausgebildet ist.

4. Vorrichtung (10) nach einem der Ansprüche 1 bis 3, **dadurch gekennzeichnet, dass** an den gegenüberliegenden Stirnseiten der Vorrichtung (10) mindestens ein Vorsprung (13) und/oder mindestens eine Vertiefung (14) ausgebildet ist, wobei eine Vertiefung (14) auf einer Stirnseite einem Vorsprung (13) auf der anderen Stirnseite gegenüberliegt.

5. Vorrichtung (10) nach einem der Ansprüche 1 bis 4, **dadurch gekennzeichnet, dass** der Vorsprung (13) und/oder die Vertiefung (14) zylinderförmig ausgestaltet ist.

6. Vorrichtung (10) nach einem der Ansprüche 1 bis 5, **dadurch gekennzeichnet, dass** mindestens ein Vorsprung (13) und mindestens eine Vertiefung (14) alternierend auf einer Linie um den Mittelpunkt der Stirnseite angeordnet sind.

7. Vorrichtung (10) nach einem der Ansprüche 1 bis 6, **dadurch gekennzeichnet, dass** mehrere Vorsprünge (13) und/oder Vertiefungen (14) in einem gleichen Abstand zu einem Mittelpunkt der Stirnseite winkeläquidistant angeordnet sind.

8. System mit einer Vorrichtung (10) nach einem der Ansprüche 1 bis 7 und einem Sorptionstrockner für ein Fluid, das einen Behälter (4) aufweist, in den eine Kartusche zur Aufnahme eines Trockenmittels einsetzbar ist.

9. System nach Anspruch 8, **dadurch gekennzeichnet, dass** die Vorrichtung (10) in den Behälter (4) eingesetzt ist.

10. System nach Anspruch 8 oder 9, **dadurch gekennzeichnet, dass** an mindestens einer Stirnseite des Behälters (4) ein Anschlusselement angeordnet ist, in dem mehrere Öffnungen ausgebildet sind, und an den Öffnungen mindestens ein Vorsprung und/oder eine Vertiefung ausgebildet ist.

11. Verfahren zum Herstellen einer Vorrichtung nach einem der Ansprüche 1 bis 7, die vom Fluid durchströmbar und eine Kartusche ist, in der ein Trockenmittel angeordnet ist, **dadurch gekennzeichnet, dass** eine Vorrichtung nach einem der Ansprüche 1 bis 7, die vom Fluid durchströmbar ist und eine Kartusche ist, in der ein erstes Trockenmittel angeordnet ist, geöffnet wird, das erste Trockenmittel zumindest teilweise entnommen wird und ein zweites Trockenmittel in die Kartusche eingebracht wird.

12. Verwendung einer Vorrichtung nach einem der Ansprüche 1 bis 7 in einem System nach einem der Ansprüche 8 bis 10.

## Claims

1. Device (10) for the arrangement of a sorption dryer for a fluid in a container (4) wherein a cartridge can be inserted into the container (4) to absorb a desiccant, **characterised in that** the device (10) has a cartridge for absorbing the desiccant, and that the device (10) has a first front side and a second front side and a lateral outside wall, wherein the second front side is opposite the first front side and continues from the first side, and through openings are arranged on both front sides for passage of the fluid, wherein the device (10) has at least one projection (13) on a front side, wherein the projection (13) is arranged to be off-centre on the front side as a plug for a plug connection and an opening is arranged on the projection to allow fluid to flow through, and/or
the device (10) has at least one depression (14) on a front side, wherein the depression (14) is arranged off-centre on the front side as the socket for a plug connection and an opening is arranged in the depression to allow fluid to flow through.

2. Device (10) according to claim 1, **characterised in that** several openings (31) of the device are arranged on the front side to allow fluid to flow through, wherein said openings are arranged on a projection (13) or in a depression (14).

3. Device (10) according to any one of claims 1 or 2, **characterised in that** a sealing element is arranged on the at least one projection (13) and/or on the at least one depression (14).

4. Device (10) according to any one of claims 1 to 3, **characterised in that** at least one projection (13) and/or at least one depression (14) are/is arranged on the opposing front sides of the device (10), wherein a depression (14) on one front side is opposite a projection (13) on the other front side.

5. Device (10) according to any one of claims 1 to 4, **characterised in that** the projection (13) and/or the depression (14) are/is arranged to be cylinder-shaped.

6. Device (10) according to any one of claims 1 to 5, **characterised in that** at least one projection (13) and at least one depression (14) are arranged alternately on a line around the centre point of the front side.

7. Device (10) according to any one of claims 1 to 6, **characterised in that** several projections (13) and/or depressions (14) are arranged angularly equidistant at the same distance from the centre point of the front side.

8. System with a device (10) according to any one of claims 1 to 7 and a sorption dryer for a fluid having a container (4) into which a cartridge can be inserted for the absorption of a drying agent.

9. System according to claim 8, **characterised in that** the device (10) is inserted into the container (4).

10. System according to claim 8 or 9, **characterised in that** a connecting element is arranged on at least one front side of the container (4), in which several openings are arranged and at least one projection and/or one depression are/is arranged at the openings.

11. Method of manufacturing a device according to any one of claims 1 to 7, through which fluid can flow and is a cartridge in which a drying agent is arranged, **characterised in that** a device according to any one of claims 1 to 7, through which fluid can flow and which is a cartridge in which a first drying agent is arranged, is opened so that the first drying agent can be removed, at least partially, and a second drying agent can be inserted into the cartridge.

12. Usage of a device according to any one of claims 1 to 7 in a system according to any one of claims 8 to 10.

## Revendications

1. Dispositif (10) à mettre en place dans un réservoir (4) d'un séchoir à sorption destiné à un fluide, réservoir (4) dans lequel une cartouche destinée à recevoir un moyen de séchage peut être insérée, **caractérisé en ce que** le dispositif (10) est une cartouche destinée à recevoir le moyen de séchage et **en ce que** le dispositif (10) présente une première face avant et une deuxième face avant et une paroi extérieure latérale, la deuxième face avant étant opposée à la première face avant et faisant saillie de la première face avant, et des ouvertures de passage sont formées sur les deux faces avant pour le passage du fluide, le dispositif (10) présentant au moins une saillie (13) à une face avant, la saillie (13) étant formée excentrique sur la face avant comme une fiche pour un connecteur et une ouverture pour le passage du fluide étant formée au niveau de la saillie, et/ou
**en ce que** le dispositif (10) présente au moins un évidement (14) sur une face avant, l'évidement (14) étant formé excentrique sur la face avant comme une douille d'un connecteur et **en ce qu'**une ouverture pour le passage du fluide est formée dans l'évidement.

2. Dispositif (10) selon la revendication 1, **caractérisé en ce que** plusieurs ouvertures (31) du dispositif destinées au traversement de fluide sont formées sur la face avant, ouvertures disposées respectivement sur une saillie (13) ou dans un évidement (14).

3. Dispositif (10) selon l'une des revendications 1 ou 2, **caractérisé en ce qu'**un élément d'étanchéité est formé sur l'au moins une saillie (13) et/ou sur l'au moins un évidement (14).

4. Dispositif (10) selon l'une des revendications 1 à 3, **caractérisé en ce qu'**au moins une saillie (13) et/ou au moins un évidement (14) est/sont formé(s) sur les faces avant opposées du dispositif (10), un évidement (14) sur une face avant étant opposé à une saillie (13) sur l'autre face avant.

5. Dispositif (10) selon l'une des revendications 1 à 4, **caractérisé en ce que** la saillie (13) et/ou l'évidement (14) est/sont cylindrique(s).

6. Dispositif (10) selon l'une des revendications 1 à 5, **caractérisé en ce qu'**au moins une saillie (13) et au moins un évidement (14) sont disposés en alternance sur une ligne autour du point central de la face avant.

7. Dispositif (10) selon l'une des revendications 1 à 6, **caractérisé en ce que** plusieurs saillies (13) et/ou évidements (14) sont disposé(e)s à équidistance angulaire à égale distance d'un point central de la face avant.

8. Système avec un dispositif (10) selon l'une des revendications 1 à 7 et un séchoir à sorption destiné à un fluide présentant un réservoir (4) dans lequel une cartouche destinée à recevoir un moyen de séchage peut être insérée.

9. Système selon la revendication 8, **caractérisé en ce que** le dispositif (10) est inséré dans le réservoir (4).

10. Système selon la revendication 8 ou 9, **caractérisé en ce qu'**un élément de raccord est disposé sur au moins une face avant du réservoir (4), dans lequel plusieurs ouvertures sont formées, et **en ce qu'**au moins une saillie et/ou un évidement est/sont formé(s) sur les ouvertures.

11. Procédé de fabrication d'un dispositif selon l'une des revendications 1 à 7 qui peut être traversé par le fluide et est une cartouche, dans laquelle un moyen de séchage est disposé, **caractérisé en ce qu'**un dispositif selon l'une des revendications 1 à 7 qui peut être traversé par le fluide et est une cartouche, dans laquelle un premier moyen de séchage est disposé, est ouvert, le premier moyen de séchage est prélevé au moins partiellement et un deuxième moyen de séchage est introduit dans la cartouche.

12. Utilisation d'un dispositif selon l'une des revendications 1 à 7 dans un système selon l'une des revendication 8 à 10.
